# EUROPÄISCHE PATENTSCHRIFT

(11) **EP 0 556 431 B1**
(45) Veröffentlichungstag und Bekanntmachung des Hinweises auf die Patenterteilung: **03.05.1995**
(21) Anmeldenummer: 92102808.0
(22) Anmeldetag: 20.02.1992
(51) Int. Cl.: B01D 21/06, B01D 21/24

(54) **Klärbecken**
Clarifier basin
Bassin de clarification

(43) Veröffentlichungstag der Anmeldung: 25.08.1993
(73) Patentinhaber: DORR-OLIVER INCORPORATED, Milford Connecticut 06460-8719 (US)
(72) Erfinder: Leikam, Werner, W-6229 Walluf/Rheingau (DE)
(74) Vertreter: Weber, Dieter, Dr.

(56) Entgegenhaltungen:
- GB-A- 550 378
- US-A- 2 681 151
- US-A- 4 594 156

## Beschreibung

Klärbecken zur Klärung von Abwasser sind in manigfaltigen Ausführungen bekannt. Runde Klärbecken enthalten vielfach eine mittige Säule aus Beton mit einer um die Säule drehbar angeordneten, zentral angetriebenen Vorrichtung etwa in Form einer Käfigstruktur, an welcher ein mehrarmiges Bodenräumwerk befestigt ist. An den im Abstand vom Boden angeordneten Armen befinden sich Räumbleche, die den am Boden abgesetzten Klärschlamm von dort abräumen und an eine Stelle bringen, von wo er aus dem Klärbecken entfernt wird.

Da ein Teil der Biomasse des Klärbeckens sich nicht zum Boden absetzt, sondern zur Wasseroberfläche aufsteigt, müssen häufig in Klärbecken auch Einrichtungen zur Entfernung eines solchen Schwimmschlammes vorgesehen sein. Schwimmschlammräumwerke mit Schwimmschlammschilden, Schlammkästen und Überlaufwehren sind bekannt. Bekannt sind auch sogenannte Skimmer zur Entfernung von Schwimmschlamm von der Wasseroberfläche. Diese bestehen aus Rohren mit seitlichen Öffnungen, durch die der Schwimmschlamm in die Rohre gelangt und durch diese abgeführt wird. Üblich ist es auch, den Zulauf zu dem Klärbecken von unten über einen Düker in die Säule einzuführen und seitlich aus ihr in das Klärbecken austreten zu lassen.

Nach neueren Anforderungen sollen in Kläranlagen zusätzliche Funktionen ausgeübt werden, wie beispielsweise Phosphatentfernung, Nitrifikation und Denitrifikation. Nach herrschenden Richtlinien soll der Gesamtgehalt an suspendierten Feststoffen im Auslauf aus dem Nachklärbecken auf 20 mg/l beschränkt sein.

Um diesen Anforderungen zu genügen, erwies es sich als zweckmäßig, in früher bekannten Klärbecken übliche Überlaufwehre durch getauchte Ablaufrohre zu ersetzen, die von der Seitenwand des Klärbeckens in das Beckeninnere ragen, Öffnungen zur Aufnahme von geklärtem Abwasser besitzen und durch die Beckenwand hindurch in einer an der Peripherie des Klärbeckens ringsumlaufenden Ablaufrinne münden. Mit Hilfe solcher bekannter getauchter Ablaufrohre wird das geklärte Abwasser unterhalb der Wasseroberfläche, auf der sich der Schwimmschlamm sammelt, abgezogen und über die periphere Ablaufrinne aus dem System entfernt.

Außerdem soll bei neueren Klärbecken die Schlammräumleistung gesteigert und der Schwimmschlamm möglichst vollständig, schnell und einfach entfernt werden, auch wenn es sich dabei um ein leichtes cremeartiges Material handelt.

Die der Erfindung zugrundeliegende Aufgabe bestand somit darin, ein Klärbecken für die Abwasserbehandlung zu bekommen, das unterschiedliche Funktionen gestattet und eine verbesserte Wirkung bezüglich der Bodenschlammräumung und Schwimmschlammräumung ermöglicht.

Das erfindungsgemäße Klärbecken mit von der Seitenwand ins Beckeninnere ragenden getauchten Ablaufrohren, einer mittigen Säule, über weiche ungeklärtes Abwasser von unten in das Klärbecken eingeführt wird, einer um die Säule drehbar angeordneten, zentral angetriebenen Vorrichtung mit einem daran befestigten mehrarmigen Bodenräumwerk und einem hiervon getrennten Schwimmschlammräumwerk ist dadurch gekennzeichnet, daß die beiden Räumwerke gegenläufig oder gleichläufig mit unterschiedlicher Geschwindigkeit angetrieben werden, daß das Schwimmschlammräumwerk einen Rand- oder Zentralantrieb besitzt und auf der mittigen Säule drehbar ruhend aufgelagert ist und daß von dem Schwimmschlammräumwerk eine Schwimmschlammleitung zu einer die Säule durchdringenden Schwimmschlammablaufleitung führt.

Mit Hilfe der erfindungsgemäßen Einbauten in das Klärbecken ist es möglich, die in das Abwasser getauchten Ablaufrohre weit in das Beckeninnere ragen zu lassen und so die Ablaufqualität zu verbessern, ohne die Bodenräum- oder Schwimmschlammräumwirkung zu beeinträchtigen. In bestimmten Fällen können die in das Beckeninnere ragenden Ablaufrohre bis zur Beckenmitte reichen. Üblicherweise werden die Ablaufrohre an der gesamten Innenwandung des Klärbeckens in gleichen Abständen angebracht. Beispielsweise werden dabei Ablaufrohre an der Innenwandung des Klärbeckens befestigt, die durch die Wandung hindurch in die periphere Ablaufrinne münden.

Durch den getrennten Antrieb der beiden Räumwerke, von denen das Bodenräumwerk stets zentral angetrieben wird und das obere einen Rand- oder Zentralantrieb besitzt, bekommt man eine einfache und stabile Konstruktion der Räumwerke und eine Variierbarkeit derselben, die es gestattet, mit einfachen Mitteln die beiden Räumwerke gegenläufig oder gleichläufig mit unterschiedlicher Geschwindigkeit anzutreiben und so individuell auf die erforderliche Schlammräumleistung am Boden und an der Flüssigkeitsoberfläche einzustellen und mit Hilfe von Schwimmschlammschilden Schwimmschlamm leichter, cremeartiger Konsistenz vorzukomprimieren, um seine Entfernung effektiver zu machen.

Durch die Abführung des Schwimmschlammes durch die mittige Säule des Klärbeckens hindurch wird der Betrieb und die Konstruktion der Anlage weiter vereinfacht.

Wie bereits ausgeführt, münden die Ablaufrohre, die Öffnungen zum Eintritt des geklärten Abwassers haben, in einer peripher um das Klärbecken ringsumlaufenden Ablaufrinne, die bei runden Klärbecken, auf die die Erfindung bevorzugt anwendbar ist, kreisrund verläuft. Vorzugsweise wird diese Ablaufrinne von biologischem Material freigehalten, indem in ihr wenigstens eine an dem Schwimmschlammräumwerk befestigte Rinnenreinigungsbürste angeordnet ist. Vorzugsweise sind an dem Schwimmschlammräumwerk wenigstens eine oder mehr Rinnenreinigungsbürsten befestigt und laufen mit dem Schwimmschlammräumwerk in der Ablaufrinne um. Um eine zusätzliche Reinigungswirkung der Rinnenreinigungsbürsten zu bekommen, sind diese zusätzlich zu der Umlaufbewegung in der Ablaufrinne noch um eine im wesentlichen senkrechte Achse drehbar, wodurch die Rinnenwände und der Rinnenboden von biologischem Material freigehalten werden.

Auch die Öffnungen der Ablaufrohre werden zweckmäßig durch eine zusätzliche Reinigungsvorrichtung von biologischem Material freigehalten, da dieses, wenn es sich in den Öffnungen ansetzt und dort vermehrt, die Öffnungen mehr und mehr zusetzen und das Einlaufen von geklärtem Abwasser verhindern kann. Derartige Reinigungsvorrichtungen können aus Lappen oder Bürsten bestehen, die an dem umlaufenden Schwimmschlammräumwerk befestigt sind und während des Umlaufes über die stationären Ablaufrohre schleifen und dabei angesetztes biologisches Material abwischen.

Das Schwimmschlammräumwerk kann unterschiedlich gestaltet sein und beispielsweise bei geringem Schwimmschlammanfall oder bei relativ kompaktem Schwimmschlamm aus Raumblechen bestehen, die an einer Brücke befestigt sind. Bevorzugt besteht das Schwimmschlammräumwerk aber aus einer drehenden Räumerbrücke mit daran befestigten Skimmern, die für eine wirkungsvolle Räumung von Schwimmschlamm unterschiedlichster Konsistenz, auch von cremeartiger leichter Konsistenz geeignet sind. Diese bekannten Skimmer bestehen aus Rohren mit einem Längsschlitz, in den der Schwimmschlamm eindringen kann. Durch die Rohre wird der Schwimmschlamm zu einem Sammelbehälter geführt und von dort aus dem System entfernt. Bekanntermaßen sind die Skimmerrohre um ihre Längsachse drehbar, so daß die Eintauchtiefe des Eintrittsschlitzes verändert oder bei Bedarf über den Wasserspiegel angehoben werden kann, um so das Eintreten von geklärtem Wasser zu verhindern, während kein Schwimmschlammräumen erforderlich ist, oder den Eintrittsschlitz weite unter die Wasseroberfläche abzusenken, um die Eintrittshöhe der Schichtdicke des Schwimmschlammes anzupassen.

Zweckmäßig ist an der umlaufenden Brücke des Schwimmschlammräumwerks Schwimmschlammaufnahmekasten als Pumpensumpf für eine darin angeordnete Pumpe vorgesehen. Der aus den Skimmern in den Schwimmschlammkasten fließende Schwimmschlamm wird über die Pumpe zu einer Schwimmschlammleitung gebracht und durch diese zu einem Schwimmschlammablauf überführt, der von oben in die mittige Säule des Klärbeckens eintritt und durch diese hindurchführt und unterhalb des Klärbeckens mündet.

Bei leichter cremeartiger Konsistenz des Schwimmschlammes gelangt dieser nur schwer und unvollständig in die Skimmer des Schwimmschlammräumwerkes. Aus diesem Grund ist es bevorzugt, den Schwimmschlamm auf einfache Weise zu komprimieren bzw. in die Skimmer zu drücken. Hierzu sind vorzugsweise in dem erfindungsgemäßen Klärbecken Schwimmschlammschilde vorgesehen. Diese befinden sich in Normalstellung in Höhe der Skimmer. Bei Annäherung der Skimmer an die Schwimmschlammschilde während der Kreisbewegung des Schwimmschlammräumwerkes, an dem die Skimmer befestigt sind, wird der zwischen dem Skimmer und dem Schwimmschlammschild befindliche Schwimmschlamm komprimiert und in den Eintrittsschlitz des Skimmers gedrückt. Die Schwimmschlammschilde sind so um eine Achse schwenkbar gelagert, daß sie bei Berührung mit einem Skimmer von diesem niedergedrückt werden, so daß die Skimmer über die Schwimmschlammschilde hinweggehen und weiter auf ihrer Kreisbahn geführt werden können. Wenn der Skimmer das Schwimmschlammschild überquert hat, richtet sich dieses wieder auf und gelangt in die Normalstellung in Höhe der Skimmer. Hierzu ist es zweckmäßig, daß die Schwimmschlammschilde an einem Ende von um eine Achse schwenkbaren Hebelarmen befestigt sind, wobei an dem anderen Ende der Hebelarme jeweils ein Gewicht befestigt ist, das die Schwimmschlammschilde nach Überqueren durch die Skimmer in die Normalhöhe zurückdrückt.

Im Bereich zwischen den Ablaufrohren und der mittigen Säule ist es zweckmäßig, daß die Schwimmschlammschilde an dem Bodenräumwerk befestigt sind und mit diesem durch das Klärbecken kreisen. Da erfindungsgemäß das Bodenräumwerk und das Schwimmschlammräumwerk entweder gegenläufig oder gleichläufig mit unterschiedlicher Geschwindigkeit angetrieben werden, gibt es periodisch Zeitpunkte, an denen das Schwimmschlammräumwerk das Bodenräumwerk überquert, wobei sich die Schwimmschlammschilde den Skimmern nähern und schließlich die Skimmer die Schwimmschlammschilde niederdrücken und überqueren.

Diese Konstruktion und dieser Vorgang sind nicht möglich im Bereich der Ablaufrohre, so daß in diesem Bereich die Schwimmschlammschilde ortsfest mit einer an der Beckenwand befestigten Vorrichtung angeordnet sind, wobei die Befestigungsart wieder derart ist, daß die Schilde beim Überqueren durch die Brücke mit den Skimmern niedergedrückt werden, um die Skimmer vorbeizulassen.

Das zentral angetriebene Bodenräumwerk kann von üblicher Bauart sein und besitzt vorzugsweise zwei, vier oder sechs Arme, die sich in einem Abstand vom Boden parallel zu diesem erstrecken. An der Trägerstruktur der Bodenräumwerkarme sind üblicherweise Räumbleche angeordnet, die an ihrem unteren freien Ende noch eine Gummileiste tragen können, um die abgesetzte Biomasse von dem Beckenboden vollständig abzuräumen, ohne die Räumbleche oder den Boden zu beschädigen.

Der Beckenboden ist zweckmäßig vom Rand her zur mittigen Säule hin geneigt, um den abgesetzten Schlamm zur Mitte hin zu befördern. Hierzu können die Bodenräumwerkarme in einem Winkel zum Beckenradius stehen, um diese Beförderung des Schlammes zur Mitte zu unterstützen.

Zweckmäßig ist die mittige Säule von einer Schlammsammelrinne mit im wesentlichen V-förmigem Querschnitt umgeben, und diese Sammelrinne besitzt ein Ablaufrohr, so daß der vom Beckenboden in die Schlammsammelrinne gedrückte Schlamm durch dieses Ablaufrohr abgezogen werden kann. Durch wenigstens einen in der Schlammsammelrinne angeordneten Stutzenkratzer, dessen Form im wesentlichen dem Querschnitt der Schlammsammelrinne angepaßt ist, wird der Schlamm vorzugsweise zu dem Ablaufrohr hin gedrückt, was seine Entfernung aus der Schlammsammelrinne erleichtert.

Die mittige Säule des Klärbeckens nach der Erfindung enthält für den Abwasserzulauf eine sich von unten aus nach oben erstreckende Zulaufleitung, die an einen Düker angeschlossen ist. Unterhalb des Wasserspiegels besitzt die Säule Verbindungsöffnungen zwischen der Zulaufleitung und dem Beckeninhalt, so daß kontinuierlich Abwasser aus der Zulaufleitung der Säule in das Becken austreten kann. Zweckmäßig sind die Zulauföffnungen von einem Einlaufzylinder umgeben, um den Zulauf gleichmäßig zu verteilen. Der Einlaufzylinder ist nach unten offen, so daß das zulaufende Abwasser nach unten fällt und sich mit dem Beckeninhalt vermischt.

Während die Säule selbst ortsfest auf dem Beckenboden angeordnet ist, ist sie von einer drehbar angeordneten Vorrichtung, vorzugsweise einer Käfigstruktur umgeben, an welcher die Arme des Bodenräumwerkes befestigt sind. Diese Vorrichtung und mit ihr das Bodenräumwerk werden von einem über dem Wasserspiegel auf oder an der Säule angeordneten Antrieb mit Getriebemotor über eine Übersetzung in kreisende Bewegung versetzt. Zweckmäßig mittig am oberen Ende der Säule befindet sich ein Auflager für das Schwimmschlammräumwerk, das als Rohr ausgebildet und durch die mittige Öffnung des Zentralantriebes geführt ist. Dieses ruht, wenn es nur einen Radius des Klärbeckens übergreift, mit seinem freien Ende, wenn es dagegen den Durchmesser des Klärbeckens übergreift, mit seinem Mittelbereich drehbar auf diesem Auflager, welches somit zur Unterstützung des nicht angetriebenen Bereiches des Schwimmschlammräumwerkes dient.

Außer dem Zulaufrohr für ungeklärtes Abwasser enthält die mittige Säule die sich an die Schwimmschlammleitung anschließende Schwimmschlammablaufleitung, mit Hilfe welcher der Schwimmschlamm nach unten abgeführt wird. Zweckmäßig enthält die mittige Säule zusätzlich noch Versorgungsleitungen, wie beispielsweise für die für den Betrieb der Anlage erforderlichen Stromleitungen und/oder für Brauchwasser, das im oberen Bereich der Anlage benötigt wird, um Teile der Anlage abzuspritzen.

Je nach der Länge der Ablaufrohre kann es zweckmäßig sein, daß deren freie, ins Beckeninnere ragenden Enden an einem gemeinsamen Ringblech befestigt sind, um die Stabilität der Ablaufrohre zu erhöhen. Dieses Ringblech ist bei runden Klärbecken konzentrisch mit der Beckenwand im Abstand von der mittigen Säule angeordnet.

Durch die Zeichnung wird die Erfindung weiter erläutert. In dieser bedeutet:
- Figur 1: einen senkrechten Schnitt durch ein Klärbecken nach der Erfindung, wobei der linke Teil weggebrochen ist,
- Figur 2: eine vergrößerte Ausschnittsdarstellung des Umfangsabschnittes des in Figur 1 dargestellten Klärbeckens mit weggebrochenem Rest,
- Figur 3: einen Schnitt entlang der Linie III-III in Figur 1, von rechts gesehen, unter Weglassung des Bodenräumwerks und des Beckens selbst,
- Figur 4: einen senkrechten Schnitt entlang der Linie IV-IV in Figur 1 und
- Figur 5: einen Schnitt entlang der Linie V-V in Figur 4.

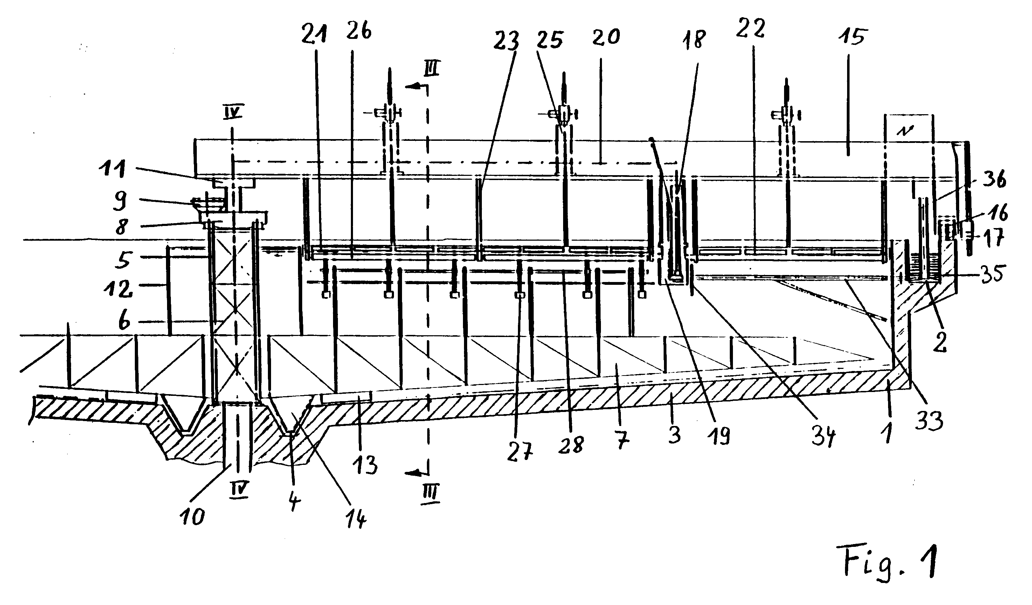

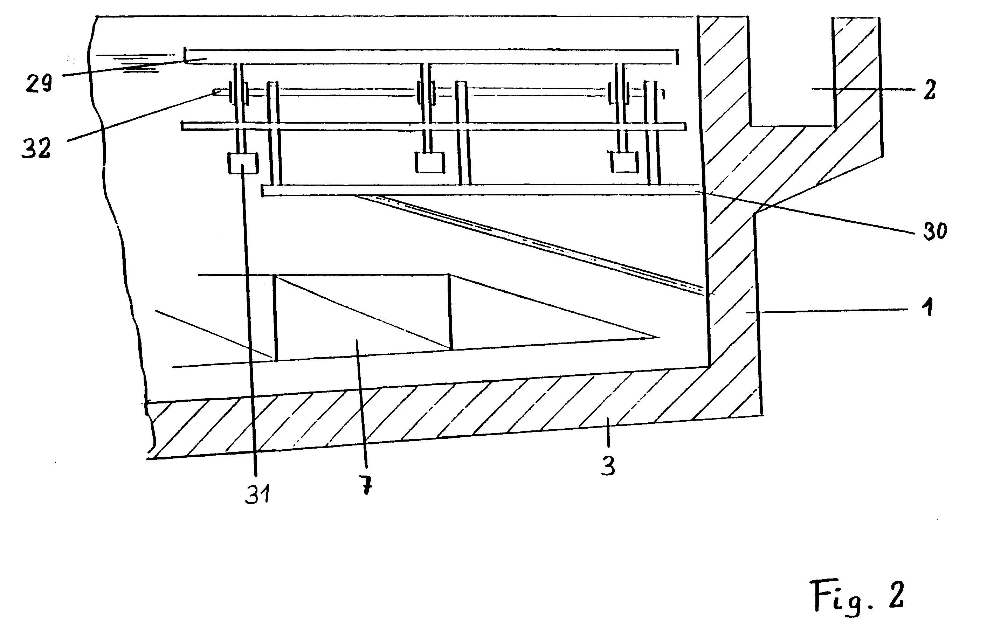

Das in den Figuren 1 und 2 dargestellte Klärbecken 1 besitzt eine rings umlaufende Ablaufrinne 2 und einen zur Mitte hin geneigten Boden 3, in welchem eine Schlammsammelrinne 4 mit V-förmigem Querschnitt ausgebildet ist. Diese Schlammsammelrinne 4 umgibt eine mittige Säule 5, die ortsfest auf der Beckensohle gelagert ist.

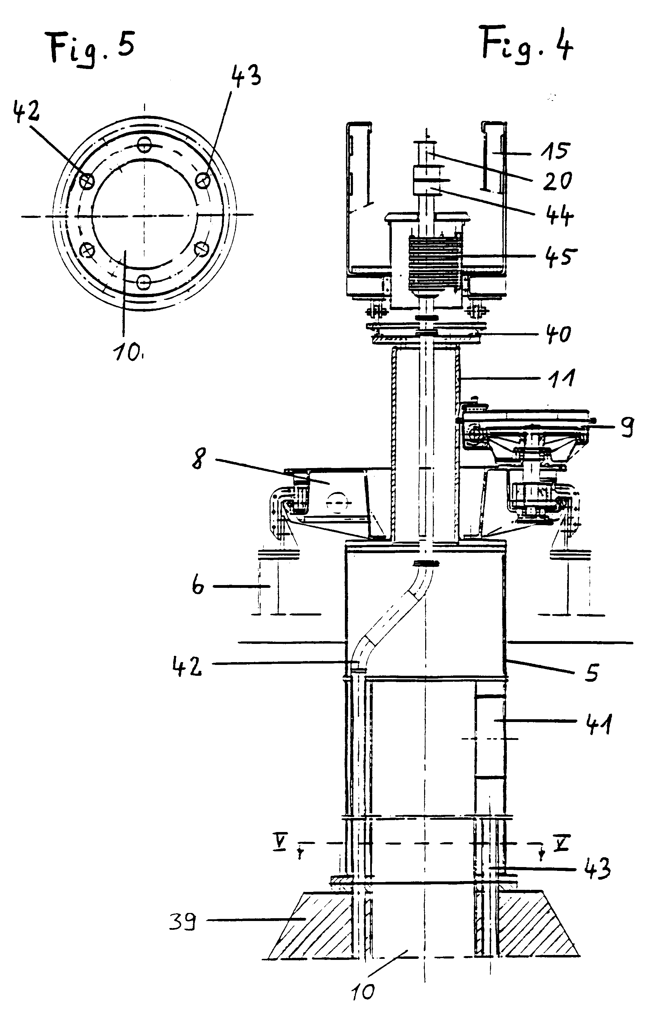

Die Säule 5 ist von einer drehbar angeordneten Käfigstruktur 6 umgeben, an welcher die Arme eines Bodenräumwerkes 7 befestigt sind. Die Käfigstruktur mit den daran befestigten Bodenräumwerkarmen wird um die Achse der Säule 5 mit Hilfe eines Zentralantriebs 8 mit einem Getriebemotor 9 gedreht. Die Säule 5 besitzt eine von unten in sie eingeführte Zulaufleitung 10 und am oberen Ende ein Auflager 11 für die drehbar ruhende Auflagerung des Schwimmschlammräumwerkes. Die Säule 5 ist von einem Einlaufzylinder 12 umgeben. Die weiteren Einzelheiten der Säule sind besser aus Figur 4 ersichtlich.

An dem Bodenräumwerk 7 sind in Bodennahe über die ganze Länge Räumbleche 13 befestigt, von denen in Figur 1 nur eines dargestellt ist und die in Figur 2 der Einfachheit halber weggelassen wurden. Weiterhin sind an dem Bodenräumwerk in die Schlammsammelrinne 4 eingreifende Stutzenkratzer 14 befestigt.

Das Schwimmschlammräumwerk besitzt eine drehbare Brücke 15, die mit ihrem einen Ende auf dem Auflager 11 der Säule 5 drehbar ruhend aufgelagert ist und an ihrem anderen Ende, dem Außenende, ein Fahrwerk 16 mit einem Antrieb 17, also einem Randantrieb besitzt. Stattdessen könnte für die Brücke 15 auch ein Zentralantrieb vorgesehen sein. An der drehbaren Brücke 15 ist eine Schlammpumpe 18 mit einem Pumpensumpf 19 befestigt. Die Pumpe 18 ist mit einer Schwimmschlammleitung 20 verbunden, die zu der Schwimmschlammablaufleitung im Inneren der Säule 5 führt, welche in Figur 4 dargestellt ist.

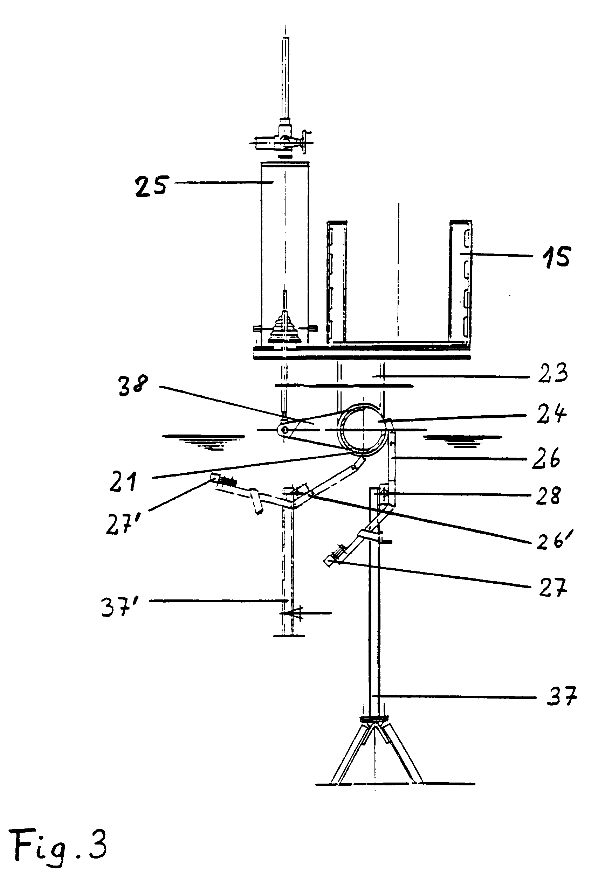

An der Brücke 15 sind zwischen der Säule 5 und dem Pumpensumpf 19 ein innerer Skimmer 21 und zwischen dem Pumpensumpf 19 und der Beckenwand des Klärbeckens 1 ein äußerer Skimmer 22 vorgesehen. Beide Skimmer sind über Vertikal-Aufhängungen 23 an der Brücke 15 befestigt und besitzen Längsschlitze, die in Figur 3 deutlich erkennbar sind und deren Eintauchtiefe mit Hilfe von Stellantrieben 25 verändert werden kann. Die Skimmer sind im Pumpensumpf 19 mündende Rohre, über welche der Schwimmschlamm von der Abwasseroberfläche zum Pumpensumpf geführt wird.

Dem inneren Skimmer 21 sind Schwimmschlammschilde 26 zugeordnet, die an dem gezeigten Arm des Bodenräumwerks 7 befestigt sind. Mit Hilfe von Gewichten 27 werden sie in ihrer Normallage gehalten, sind aber auf der Drehachse 28 derart drehbar gelagert, daß sie dann, wenn sie von dem Skimmer 21 überquert werden, weggedrückt werden, wie durch die beiden Positionen in Figur 3 erläutert ist.

Dem Skimmer 22 ist ein ortsfestes Schwimmschlammschild 29 zugeordnet, das der Deutlichkeit halber in Figur 1 weggelassen wurde, aber in Figur 2 gezeigt ist. Dieses Schwimmschlammschild 29 ist über eine ortsfeste Verlagerung 30 an der Klärbeckenwand befestigt und besitzt wie die Schwimmschlammschilde 26 Gewichte 31, die ihn in Normalstellung zum Skimmer 22 hin drücken. Wenn das Schwimmschlammschild 29 von dem Skimmer 22 bei dessen Drehbewegung überquert wird, wird es jedoch wie das Schwimmschlammschild 26 um die Drehachse 32 gedreht und nach unten weggedrückt, wie in Figur 3 erläutert ist.

Das Schwimmschlammschild 29 ist ortsfest an der Beckenwand und nicht drehbar am Bodenräumer befestigt, da er zwischen den ebenfalls an der Beckenwand befestigten und in Figur 1 dargestellten Ablaufrohren 33 liegt. Diese Ablaufrohre sind mit Öffnungen versehene, am inneren Ende verschlossene und dort an einem Ringblech 34 befestigte Rohre, die die Wand des Klärrbeckens 1 durchdringen und in der Ablaufrinne 2 münden.

An der Brücke 15 ist auch wenigstens eine mit ihr in der Ablaufrinne 2 umlaufende Rinnenreinigungsbürste 35 befestigt, die sich um die senkrechte Achse 36 dreht.

Wie oben erwähnt, erläutert Figur 3 die Bewegung der Schwimmschlammschilde 26 und 29, wenn sie von den Skimmern 21 bzw. 22 überquert werden. Hierzu ist das Schwimmschlammschild 26 in zwei Positionen dargestellt. Die rechte Position zeigt die Normalstellung vor dem Überqueren durch den Skimmer 21, die linke gestrichelte Position dagegen die nach unten gedrückte Lage beim Überqueren durch den Skimmer 21.

Wie Figur 3 zeigt, ist an der Brücke 15 über eine Vertikalaufhängung 23 der Skimmer 21 in Form eines Rohres mit einem Längsschlitz 24 befestigt. Mit Hilfe des Stellantriebes 25 kann die Eintauchtiefe des Schlitzes 24 über die Wange 38 verändert werden.

Über eine Verlagerung 37 ist das Schwimmschlammschild 26 an dem in Figur 3 nicht gezeigten Bodenräumwerk 7 befestigt und wird durch das Gewicht 27 in die in der rechten Position gezeigte aufrechte Stellung in Höhe des Skimmers 21 gedrückt. Wenn der Skimmer das Schwimmschlammschild bei der Drehbewegung der Brücke 15 überquert, drückt er es, wie in Figur 3 in der linken gestrichelten Position mit dem Bezugszeichen 26' gezeigt ist, nieder, indem sich das Schwimmschlammschild um die Drehachse 28 dreht. Dabei wird das Gewicht 27' angehoben, drückt das Schwimmschlammschild nach dem Überqueren durch den Skimmer 21 aber schließlich wieder in seine in der rechten Position dargestellte Normalstellung. In der linken Position ist die Verlagerung mit dem Bezugszeichen 37' versehen.

Durch die Figuren 4 und 5 ist die Konstruktion der mittigen Säule 5 erläutert. Diese ist im unteren Teil der Darstellung weggebrochen und der Deutlichkeit halber um 30° verdreht, um gleichzeitig in Figur 4 die Verbindungsöffnungen und Versorgungsleitungen zu zeigen.

Die Säule 5 ist auf der Beckensohle 39 ortsfest gelagert. Auf ihrem oberen Ende befindet sich der Zentralantrieb 8 mit dem Gebtriebemotor 9 und der Käfigstruktur 6, die in der Zeichnung weggebrochen dargestellt ist und mit Hilfe des Zentralantriebs 8 um die Säule 5 drehbar ist.

Das Auflager 11 hat die Form eines Rohres, welches den Zentralantrieb 8 mittig durchdringt. Über die Kugeldrehverbindung 40 ruht die Brücke 15 drehbar auf dem Auflager 11.

Das durch die Zulaufleitung 10 in die Säule 5 aus dem Dücker kommende ungeklärte Abwasser gelangt über Verbindungsöffnungen 41 in das Klärbecken 1. Von dem in Figur 1 dargestellten Pumpensumpf 19 gelangt der Schwimmschlamm über die Schwimmschlammleitung 20 in die die Säule 5 durchdringende Schwimmschlammablaufleitung 42. Außerdem sind in der Säule 5 fünf Versorgungsleitungen 43 für Stromleitungen, Brauchwasser und dergleichen vorgesehen. Gegebenenfalls kann auch eine weitere Schwimmschlammablaufleitung anstelle einer der Versorgungsleitungen 43 vorgesehen sein.

In der Brücke 15 ist zwischen der Schwimmschlammleitung 20 und der Schwimmschlammablaufleitung 42 ein Drehgelenk 44 gezeigt. Im Bereich der Brücke 15 sind außerdem übliche Schleifringkörper 45 dargestellt.

Beim Betrieb der in der Zeichnung dargestellten Vorrichtung wird der am Boden des Klärbeckens 1 abgesetzte Schlamm mit Hilfe des Bodenräumwerkes 7 und der daran befestigten Räumbleche 13 in die Schlammsammelrinne 4 geräumt und aus dieser durch ein nicht gezeigtes Ablaufrohr entfernt. Der Schwimmschlamm im Bereich der Wasseroberfläche wird von den Schwimmschlammschilden 26 und 29 in die Skimmer 21 und 22 gedrückt und gelangt von diesen über den Pumpensumpf 19, die Schwimmschlammleitung 20 und die Schwimmschlammablaufleitung 42 aus dem Klärbecken. Das geklärte Abwasser geht über die Ablaufrohre 33 in die Ablaufrinne 2 und wird aus dieser durch ein nicht gezeigtes Ablaufrohr entfernt.

Die Brücke 15 mit dem daran befestigten Schwimmschlammräumwerk und das Bodenräumwerk werden gegenläufig oder mit unterschiedlicher Geschwindigkeit angetrieben, so daß die Skimmer periodisch die ihnen zugeordneten Schwimmschlammschilde überqueren.

## Patentansprüche

1. Klärbecken mit von der Seitenwand ins Beckeninnere ragenden getauchten Ablaufrohren (33), einer mittigen Säule (5), über welche ungeklärtes Abwasser von unten in das Klärbecken eingeführt wird, einer um die Säule drehbar angeordneten, zentral angetriebenen Vorrichtung mit einem daran befestigten mehrarmigen Bodenräumwerk (7) und einem hiervon getrennten Schwimmschlammräumwerk, **dadurch gekennzeichnet**, daß die beiden Räumwerke gegenläufig oder gleichläufig mit unterschiedlicher Geschwindigkeit angetrieben werden, daß das Schwimmschlammräumwerk einen Rand- oder Zentralantrieb besitzt und auf der mittigen Säule drehbar ruhend aufgelagert ist und daß von dem Schwimmschlammräumwerk eine Schwimmschlammleitung (20) zu einer die Säule durchdringenden Schwimmschlammablaufleitung (42) führt.

2. Klärbecken nach Anspruch 1, **dadurch gekennzeichnet**, daß die getauchten Ablaufrohre in eine am Klärbeckenumfang ringsum laufende Ablaufrinne (2) münden, in der wenigstens eine an dem Schwimmschlammräumwerk befestigte, mit ihm umlaufende Rinnenreinigungsbürste (35) befestigt ist.

3. Klärbecken nach Anspruch 2, **dadurch gekennzeichnet**, daß die Rinnenreinigungsbürsten zusätzlich zu ihrer Umlaufbewegung um eine im wesentlichen senkrechte Achse drehbar sind.

4. Klärbecken nach einem der Ansprüche 1 bis 3, **dadurch gekennzeichnet,** daß das Schwimmschlammräumwerk eine rand- oder zentralangetriebene Brücke (15) mit daran befestigten Skimmern (21, 22) ist.

5. Klärbecken nach einem der Ansprüche 1 bis 4, **dadurch gekennzeichnet**, daß an dem Bodenräumwerk in Höhe der Skimmer Schwimmschlammschild (26, 29) befestigt sind, die derart um eine Achse schwenkbar gelagert sind, daß sie beim Queren der Skimmer-Umlaufbahn von den Skimmern niedergedrückt werden.

6. Klärbecken nach einem der Ansprüche 1 bis 5, **dadurch gekennzeichnet**, daß im Beckenwandbereich Schwimmschlammschilde (29) in Höhe der Skimmer ortsfest derart um eine Achse (32) schwenkbar befestigt sind, daß sie bei Kontakt mit einem Skimmer von diesem niedergedrückt werden.

7. Klärbecken nach einem der Ansprüche 1 bis 6, **dadurch gekennzeichnet,** daß die mittige Säule zusätzliche Versorgungsleitungen (43) enthält.

8. Klarbecken nach einem der Ansprüche 1 bis 7, **dadurch gekennzeichnet**, daß das Schwimmschlammräumwerk eine Pumpe (18) mit einem den Schwimmschlamm aufnehmenden Pumpensumpf (19) und eine Verbindungseinrichtung zwischen der Pumpe und der Schwimmschlammleitung (20) aufweist.

9. Klärbecken nach einem der Ansprüche 1 bis 8, **dadurch gekennzeichnet**, daß die mittige Säule von einer Schlammsammelrinne (4) mit im wesentlichen V-förmigem Querschnitt und mit einem Ablaufrohr umgeben ist.

10. Klärbecken nach Anspruch 9, **dadurch gekennzeichnet**, daß in der Schlammsammelrinne wenigstens ein Stutzenkratzer (14) angeordnet ist.

11. Klärbecken nach einem der Ansprüche 1 bis 10, **dadurch gekennzeichnet**, daß die mittige Säule von einem Einlaufzylinder umgeben ist.

12. Klärbecken nach einem der Ansprüche 1 bis 11, **dadurch gekennzeichnet**, daß die Ablaufrohre eine Reinigungsvorrichtung zum Freihalten der Ablauföffnungen aufweisen.

13. Klärbecken nach einem der Ansprüche 1 bis 12, **dadurch gekennzeichnet**, daß die mittige Säule von einer sie drehbar umgebenden, durch einen zentral angeordneten Antrieb (8) mit Getriebemotor (9) angetriebenen Käfigstruktur (6) umgeben ist, an welcher die Arme des Bodenräumwerkes (7) befestigt sind.

14. Klärbecken nach einem der Ansprüche 1 bis 13, **dadurch gekennzeichnet**, daß das Bodenräumwerk zwei, vier oder sechs Arme aufweist.

15. Klärbecken nach einem der Ansprüche 5 bis 14, **dadurch gekennzeichnet**, daß die Schwimmschlammschilde an einem Ende von um eine Achse schwenkbaren Hebelarmen befestigt sind, wobei an dem anderen Ende der Hebelarme jeweils ein Gewicht (27) befestigt ist, das die Schwimmschlammschilde in Höhe der Skimmer drückt.

16. Klärbecken nach einem der Ansprüche 1 bis 15, **dadurch gekennzeichnet**, daß die Ablaufrohre (33) an ihrem freien, ins Beckeninnere ragenden Ende gemeinsam an einem Ringblech (34) befestigt sind.

## Claims

1. Clarifier basin with waste pipes (33) projecting from the side wall and immersed inside the basin, a central column (5), via which unclarified effluent is fed from below into the clarifier basin, a centrally driven device arranged to rotate around the column with a multiple-arm base clearing means (7) attached thereto and a scum clearing means separate therefrom, characterised in that the two clearing means are driven in opposite directions or in the same direction at different speeds; that the scum clearing means has a peripheral or central drive and is arranged to sit rotatably on the central column; and that a scum pipe (20) runs from the scum clearing means to a scum waste pipe (42) passing through the column.

2. Clarifier basin according to Claim 1, characterised in that the immersed waste pipes feed into a discharge channel (2), which runs around the periphery of the clarifier basin and in which is attached at least one channel cleaning brush (35) fastened to the scum clearing means to circulate with it.

3. Clarifier basin according to Claim 2, characterised in that in addition to their circulatory movement, the channel cleaning brushes may rotate around an essentially vertical axis.

4. Clarifier basin according to one of Claims 1 to 3, characterised in that the scum clearing means is a peripherally or centrally driven bridge (15) with skimmers (21, 22) attached to it.

5. Clarifier basin according to one of Claims 1 to 4, characterised in that scum blades (26, 29) are attached to the base clearing means at the level of the skimmers to allow them to swivel around an axis in such a way that they are pressed down by the skimmers when traversing the circulatory path of the skimmers.

6. Clarifier basin according to one of Claims 1 to 5, characterised in that scum blades (29) are fixedly attached at the level of the skimmers in the basin wall area to allow them to swivel around an axis (32) in such a way that they are pressed down by a skimmer when they come into contact with it.

7. Clarifier basin according to one of Claims 1 to 6, characterised in that the central column is provided with additional conduits (43).

8. Clarifier basin according to one of Claims 1 to 7, characterised in that the scum clearing means has a pump (18) with a sump (19) to receive the scum and a connection means between the pump and the scum pipe (20).

9. Clarifier basin according to one of Claims 1 to 8, characterised in that the central column is surrounded by a scum collecting channel (4) with an essentially V-shaped cross-section and a waste pipe.

10. Clarifier basin according to Claim 9, characterised in that at least one connector scraper (14) is disposed in the scum collecting channel.

11. Clarifier basin according to one of Claims 1 to 10, characterised in that the central column is surrounded by a delivery cylinder.

12. Clarifier basin according to one of Claims 1 to 11, characterised in that the waste pipes have a cleaning device to keep the waste openings clear.

13. Clarifier basin according to one of Claims 1 to 12, characterised in that the central column is surrounded by a cage-like structure (6), which rotates around it and is driven by a centrally disposed drive (8) with geared motor (9), the arms of the base clearing means (7) being attached to said cage-like structure (6).

14. Clarifier basin according to one of Claims 1 to 13, characterised in that the base clearing means has two, four or six arms.

15. Clarifier basin according to one of Claims 5 to 14, characterised in that the scum blades are attached to one end of lever arms, which can swivel around an axis, and at the other end of the respective lever arms a weight (27) is attached, which presses the scum blades to the level of the skimmers.

16. Clarifier basin according to one of Claims 1 to 15, characterised in that at their free end projecting inside the basin, the waste pipes (33) are attached jointly to an annular plate (34).

## Revendications

1. Bassin de clarification muni de tuyaux de décharge (33) trempés et faisant saillie à l'intérieur du bassin à partir de la paroi latérale, d'une colonne centrale (5) par l'intermédiaire de laquelle des eaux usées non clarifiées sont introduites par en dessous dans le bassin de clarification, d'un dispositif commandé de façon centrale, disposé de façon pivotante autour de la colonne et muni d'un mécanisme d'évacuation de fond (7) à plusieur bras, fixé à la colonne, et d'un mécanisme d'évacuation de boue surnageante séparé de ce dernier, caractérisé en ce que les deux mécanismes d'évacuation sont commandés en sens contraire ou de façon synchronisée, à une vitesse différente, en ce que le mécanisme d'évacuation de boue surnageante possède une commande de bord ou centrale et est logé en reposant de façon pivotante sur la colonne centrale et en ce que, à partir du mécanisme d'évacuation de boue surnageante, une conduite de boue surnageante (20) amène à un conduit de décharge de boue surnageante (42) traversant la colonne.

2. Bassin de clarification 1, caractérisé en ce que les tuyaux de décharge trempés débouchent dans une rigole d'écoulement (2) qui fait le tour de la circonférence du bassin de clarification, rigole d'écoulement dans laquelle est fixé au moins un écouvillon (35) fixé au mécanisme d'évacuation de boue surnageante et tournant avec lui.

3. Bassin de clarification selon la revendication 2, caractérisé en ce que les écouvillons, en plus de leur mouvement de rotation, peuvent pivoter autour d'un axe essentiellement vertical.

4. Bassin de clarification selon l'une des revendications 1 à 3, caractérisé en ce que le mécanisme d'évacuation de boue surnageante est un pont (15) à commande de bord ou centrale munie d'absorbeurs d'huile qui y sont fixés.

5. Bassin de clarification selon l'une des revendications 1 à 4, caractérisé en ce que, sur le mécanisme d'évacuation de fond, à hauteur des absorbeurs d'huile, sont fixées des plaques pour la boue surnageante (26, 29) qui sont logées de façon pivotante autour d'un axe, de façon à être enfoncées par les absorbeurs d'huile lorsqu'elles traversent la trajectoire de ces derniers.

6. Bassin de clarification selon l'une des revendications 1 à 5, caractérisé en ce que, dans la zone des parois du bassin, sont fixées des plaques pour la boue surnageante (29) à hauteur des absorbeurs d'huile, de façon fixe et pivotante autour d'un axe (32), de sorte qu'en contact avec un absorbeur d'huile, elles sont enfoncées par celui-ci.

7. Bassin de clarification selon l'une des revendications 1 à 6, caractérisé en ce que la colonne centrale contient des conduites d'alimentation supplémentaires (43).

8. Bassin de clarification selon l'une des revendications 1 à 7, caractérisé en ce que le mécanisme d'évacuation de boue surnageante présente une pompe (18) munie d'un puisard d'aspiration (19) recueillant la boue surnageante et une installation de raccordement entre la pompe et la conduite de boue surnageante (20).

9. Bassin de clarification selon l'une des revendications 1 à 8, caractérisé en ce que la colonne centrale est entourée par une rigole collectrice de boue (4) avec une section transversale essentiellement en forme de V et un tuyau d'écoulement.

10. Bassin de clarification selon la revendication 9, caractérisé en ce qu'au moins un racloir d'appui (14) est disposé dans la rigole collectrice de boue.

11. Bassin de clarification selon l'une des revendications 1 à 10, caractérisé en ce que la colonne centrale est entourée d'un cylindre d'entrée.

12. Bassin de clarification selon l'une des revendications 1 à 11, caractérisé en ce que les tuyaux d'écoulement présentent un dispositif de nettoyage destiné à maintenir les ouvertures d'écoulement libres.

13. Bassin de clarification selon l'une des revendications 1 à 12, caractérisé en ce que la colonne centrale est entourée par une structure de cage qui l'entoure de façon rotative et est entraînée par une commande (8) disposée de façon centrale et munie d'un moto-réducteur (9), structure de cage sur laquelle sont fixés les bras du mécanisme d'évacuation de fond (7).

14. Bassin de clarification selon l'une des revendications 1 a 13, caractérisé en ce que le mécanisme d'évacuation de fond présente deux, quatre ou six bras.

15. Bassin de clarification selon l'une des revendications 1 à 14, caractérisé en ce que les plaques pour la boue surnageante sont fixées à une extrémité de bras de levier pivotables autour d'un axe, un poids (27) qui appuie sur les plaques pour la boue surnageante à hauteur des absorbeurs d'huile étant fixé à chaque fois à l'autre extrémité des bras de levier.

16. Bassin de clarification selon l'une des revendications 1 à 15, caractérisé en ce que les tuyaux d'écoulement (33) sont fixés en commun à une tôle annulaire (34), à leur extrémité libre qui fait saillie à l'intérieur du bassin.
